# EUROPEAN PATENT APPLICATION

(11) **EP 4 613 822 A1**
(43) Date of publication of application: **10.09.2025**
(21) Application number: 23885330.3
(22) Date of filing: 17.08.2023
(51) Int. Cl.: C09D 11/101, C09D 11/30, B41M 5/00, B41M 5/52, B41J 2/01

(54) **INK COMPOSITION FOR BLOCKING UV RAYS, AND METHOD FOR PRODUCING SUBSTRATE HAVING EMBOSSED SURFACE USING SAME**

(30) Priority: 31.10.2022 JP 2022174046
(71) Applicant: Sakata INX Corporation, Osaka-shi, Osaka 550-0002 (JP)
(72) Inventor: NAKASHIMA, Okinori, Osaka-shi, Osaka 550-0002 (JP); MYOSE, Takuya, Osaka-shi, Osaka 550-0002 (JP); OGASAHARA, Koki, Osaka-shi, Osaka 550-0002 (JP); KAWAMOTO, Kenji, Osaka-shi, Osaka 550-0002 (JP); NAKAMAE, Kosuke, Osaka-shi, Osaka 550-0002 (JP)
(74) Representative: Müller-Boré & Partner Patentanwälte PartG mbB
(86) International application number: PCT/JP2023/029744
(87) International publication number: WO 2024/095560

(57) **Abstract**

Objects are to provide an ultraviolet ray-blocking ink composition for inkjet printing that can form a print layer capable of blocking ultraviolet rays appropriately; and to provide a method for manufacturing a substrate having a desired embossed surface using the ink composition. As a solution to the problem, an ultraviolet ray-blocking ink composition for inkjet printing is provided that includes: 55.0 mass% or more of a photopolymerizable monomer, 3.0 mass% or more and less than 15.0 mass% of an UV absorbent, and 10.0 mass% or more and less than 30.0 mass% of a non-polymerizable material; the photopolymerizable monomer including a polyfunctional monomer in a proportion of 50.0 mass% or more of the photopolymerizable monomer.

## Description

### Technical Field

The present invention relates to an ink composition for forming a print layer for blocking ultraviolet rays (an ultraviolet ray-blocking ink composition) and to a method for manufacturing a substrate having an embossed surface using the same.

### Background Art

As is known, embossing methods are used to form an indented pattern on a surface of an article. Exemplary methods that are known include one in which an UV curable resin composition spread on a surface of a workpiece is irradiated with ultraviolet rays through, for example, a transparent belt bearing a print of an ultraviolet ray-blocking ink, and part of the UV curable resin composition is exclusively cured to form an embossed design (Patent Literature 1); one in which an ink containing an UV absorbent is printed on a photocurable resin paint spread on a substrate, and light is applied so as to form an embossed design in which the printed sections become concave (Patent Literature 2); one in which an UV absorbent is caused to be present as a pattern on a surface of an article, the surface is further coated with an UV curable unsaturated polyester resin film, and then ultraviolet rays are applied to cure part of the resin film, thereby forming an indented design (Patent Literatures 3 and 4); and one in which a surface that has a printed pattern of an ink containing an UV absorbent is coated with an UV sensitive curable resin film, and then ultraviolet rays are applied to cure the resin film, thereby forming an embossed design in which portions coincident with the printed pattern become concave (Patent Literature 5).

Furthermore, in recent years, digital embossing methods using an inkjet printing technique or the like have also been proposed. Digital embossing can create various embossed shapes easily and at low cost. For example, a wide variety of processed products, even in small quantities, can be produced by reading a desired shape with a scanner and reproducing the shape by inkjet printing.

Digital embossing methods that have been proposed include, for example, one in which liquid droplets (3) of an acrylate compound are sprayed in accordance with a digital template onto a liquid layer (2) formed on a surface of a workpiece (1), and further the liquid layer (2) and the liquid droplets (3) are UV-cured to form a shape on the surface of the workpiece (1) (Patent Literature 6); one in which a resin film A having photopolymerizability is applied to a surface of an article, a liquid B containing a photocrosslinkable monomer or oligomer is applied to part of the surface of the resin film A, the resin film A and the liquid B are polymerized, and the polymerization product of the liquid B and part of the cured product of the resin film A are mechanically removed to leave the cured product of the resin film A having a three-dimensional structure (Patent Literatures 7 and 8).

Furthermore, a method is known in which a protective liquid for protecting images that contains an UV absorbent and a film-forming resin is inkjet printed onto an image to protect the image from photodegradation (Patent Literature 9).

### Background Art Literature

### Patent Literature

Patent Literature 1: Japanese Unexamined Patent Application Publication No. 53-51253
Patent Literature 2: Japanese Unexamined Patent Application Publication No. 48-4602
Patent Literature 3: Japanese Unexamined Patent Application Publication No. 48-64163
Patent Literature 4: Japanese Unexamined Patent Application Publication No. 50-3139
Patent Literature 5: Japanese Unexamined Patent Application Publication No. 48-22143
Patent Literature 6: European Patent No. 3109056
Patent Literature 7: International Publication No. 2020/039361
Patent Literature 8: International Publication No. 2018/069874
Patent Literature 9: Japanese Unexamined Patent Application Publication No. 2000-225695

### Summary of the Invention

### Problems to Be Solved by the Invention

As mentioned above, digital embossing methods that include a step of mechanically removing part of a photocured resin layer have been proposed (see Patent Literatures 7 and 8). Unfortunately, these methods encounter difficulties in producing a desired embossed shape. Specifically, it is sometimes the case that: 1) the ink composition that is printed to block ultraviolet rays fails to block ultraviolet rays sufficiently and causes the base layer including a photopolymerizable resin to be completely photocured, and consequently the base layer cannot be removed; 2) the ink composition blocks ultraviolet rays excessively and inhibits sufficient curing of the base layer including a photopolymerizable resin that is to be photocured, and the base layer remains as liquid and is removed more than necessary; or 3) the ink composition does not have printability characteristics for inkjet printing and is difficult to apply by inkjet printing appropriately.

A first object of the present invention is therefore to provide an ultraviolet ray-blocking ink composition that can be inkjet printed and can form a print layer capable of blocking ultraviolet rays appropriately. A further object of the present invention is to provide a method for manufacturing a substrate having a desired embossed surface using the ultraviolet ray-blocking ink composition.

### Means for Solving the Problems

Specifically, the present invention pertains to the following ultraviolet ray-blocking ink compositions.
[1] An ultraviolet ray-blocking ink composition for inkjet printing, including:
   based on the ink composition, 55.0 mass% or more of a photopolymerizable monomer, 3.0 mass% or more and less than 15.0 mass% of an UV absorbent, and 10.0 mass% or more and less than 30.0 mass% of a non-polymerizable material;
   the photopolymerizable monomer including a polyfunctional monomer in a proportion of 50.0 mass% or more of the photopolymerizable monomer.
[2] The ultraviolet ray-blocking ink composition according to [1], wherein the non-polymerizable material includes a non-polymerizable high-molecular compound and a non-polymerizable low-molecular compound.
[3] The ultraviolet ray-blocking ink composition according to [1] or [2], which is for inkjet printing on an uncured coating film including a photopolymerizable compound.
[4] The ultraviolet ray-blocking ink composition according to [3], wherein the coating film includes a photopolymerization initiator.
   The present invention also pertains to the following methods for manufacturing a substrate having an embossed surface.
[5] A method for manufacturing a substrate having an embossed surface, including a step A of inkjet printing the ultraviolet ray-blocking ink composition described in [1] onto an uncured coating film spread on a substrate and including a photopolymerizable compound; a step B of applying ultraviolet rays to the coating film printed with the ultraviolet ray-blocking ink composition; and a step C of removing the coating film in a region in which the ultraviolet ray-blocking ink composition has been printed.
[6] The manufacturing method according to [5], wherein the coating film has a thickness of 30 µm or more.
[7] The manufacturing method according to [5] or [6], wherein the step C is a mechanical removal step.

### Effects of the Invention

The ultraviolet ray-blocking ink composition of the present invention can be printed by inkjet onto a base layer (also referred to as a coating film) including a photopolymerizable resin; upon irradiation with ultraviolet rays from above the print layer, the print layer itself is polymerized and solidified, and the print layer also appropriately shields the base layer from the ultraviolet ray irradiation so as to allow the base layer to be solidified in a semi-cured state without being completely cured (that is, the base layer is photocured to such an extent that the base layer can be solidified but is not completely photocured). On the other hand, the base layer in a region in which the ultraviolet ray-blocking ink composition is not printed is completely photocured by the ultraviolet ray irradiation; consequently, the cured products of the base layer exhibit different levels of hardness and part of the base layer can be mechanically removed. As a result, an indented pattern is formed easily, and a desired embossed design can be imparted to an article.

### Brief Description of the Drawings

[FIG. 1] is a view illustrating a flow of the manufacturing of a substrate having an embossed surface.
[FIG. 2] is a view (a photograph) illustrating embossed shapes obtained. In FIG. 2, 1 illustrates an example of the alphabet character "S"; 2 illustrates an example of "A"; 3 illustrates an example of "K"; and 4 illustrates an example of "A".

### Mode for Carrying Out the Invention

### [1. Ultraviolet ray-blocking ink compositions]

An ultraviolet ray-blocking ink composition of the present invention includes 1) a photopolymerizable monomer, 2) an UV absorbent, and 3) a non-polymerizable material, and may further include 4) an additional component.

After the ultraviolet ray-blocking ink composition of the present invention is printed by an inkjet method, ultraviolet ray irradiation induces the polymerization of the photopolymerizable monomer and the ink composition can be solidified to such a degree of solidification that the ink composition can be removed mechanically. Because the ultraviolet ray-blocking ink composition of the present invention contains an UV absorbent, the print layer formed of the ultraviolet ray-blocking ink composition can shield the region of the underlying layer (the base layer) from excessive ultraviolet ray irradiation. As a result, the base layer, even when made of a photocurable resin, is not completely cured and can stay in a semi-cured state that allows for mechanical removal of the base layer.

### [1-1. Photopolymerizable monomers]

The photopolymerizable monomer contained in the ultraviolet ray-blocking ink composition is preferably a monomer having photoradical polymerization or a monomer having photocationic polymerization; and more preferably a monomer having photoradical polymerization. The ultraviolet ray-blocking ink composition includes at least a polyfunctional photopolymerizable monomer, and may include a combination of a polyfunctional photopolymerizable monomer and a monofunctional photopolymerizable monomer.

### [1-1-1. Polyfunctional photopolymerizable monomers (polyfunctional monomers)]

The polyfunctional photopolymerizable monomer is a compound having two or more ethylenic unsaturated bonds. Examples of the polyfunctional photopolymerizable monomers include polyfunctional (meth)acrylate-based compounds and vinyl ether group-containing (meth)acrylate-based compounds described below.

The polyfunctional (meth)acrylate-based compounds may be bifunctional or may be trifunctional or higher functional. Examples of the bifunctional (meth)acrylate-based compounds include di(meth)acrylates of polyhydric alcohols, such as glycerin, pentaerythritol, diglycerin, ditrimethylolpropane, and dipentaerythritol, for example, ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethylol octane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecanedimethylol di(meth)acrylate, tricyclodecanedimethylol dicaprolactonate di(meth)acrylate, cyclohexanedimethanol di(meth)acrylate, dicyclopentanyl di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, and bisphenol F tetraethylene oxide adduct dicaprolactonate di(meth)acrylate.

Examples of the trifunctional (meth)acrylate-based compounds include glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; and 3EO (ethylene oxide)-modified products, 6EO-modified products, and 9EO-modified products of the above compounds (such as 3EO-modified trimethylolpropane tri(meth)acrylate, 3EO-modified trimethylolethane tri(meth)acrylate, and 3EO-modified trimethylolhexane tri(meth)acrylate).

Examples of the tetrafunctional or higher functional (meth)acrylate-based compounds include trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate.

Examples of the vinyl ether group-containing (meth)acrylate-based compounds include 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 1-methyl-3-vinyloxypropyl (meth)acrylate, 1-vinyloxymethylpropyl (meth)acrylate, 2-methyl-3-vinyloxypropyl (meth)acrylate, 3-methyl-3-vinyloxypropyl (meth)acrylate, 1,1-dimethyl-2-vinyloxyethyl (meth)acrylate, 3-vinyloxybutyl (meth)acrylate, 1-methyl-2-vinyloxypropyl (meth)acrylate, 2-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, 3-vinyloxymethylcyclohexylmethyl (meth)acrylate, 2-vinyloxymethylcyclohexylmethyl (meth)acrylate, p-vinyloxymethylphenylmethyl (meth)acrylate, m-vinyloxymethylphenylmethyl (meth)acrylate, o-vinyloxymethylphenylmethyl (meth)acrylate, 2-(vinyloxyisopropoxy)ethyl (meth)acrylate, 2-(vinyloxyethoxy)propyl (meth)acrylate, 2-(vinyloxyethoxy)isopropyl (meth)acrylate, 2-(vinyloxyisopropoxy)propyl (meth)acrylate, 2-(vinyloxyisopropoxy)isopropyl (meth)acrylate, 2-(vinyloxyethoxyethoxy)ethyl (meth)acrylate, 2-(vinyloxyethoxyisopropoxy)ethyl (meth)acrylate, 2-(vinyloxyisopropoxyethoxy)ethyl (meth)acrylate, and 2-(vinyloxyisopropoxyisopropoxy)ethyl (meth)acrylate.

The polyfunctional photopolymerizable monomer contained in the ultraviolet ray-blocking ink composition is preferably a monomer having less odor. This is because the ultraviolet ray-blocking ink composition is semi-cured by photoirradiation and is not completely cured. Preferred examples of the polyfunctional photopolymerizable monomers include 1,6-hexanediol diacrylate (bifunctional), neopentyl glycol PO-modified diacrylate (bifunctional), and EO-modified trimethylolpropane triacrylate (trifunctional).

[1-1-2. Monofunctional photopolymerizable monomers (monofunctional monomers)] Examples of the monofunctional photopolymerizable monomers include unsaturated carboxylic acid compounds, alkyl (meth)acrylate-based compounds, hydroxyl group-containing (meth)acrylate-based compounds, halogen-containing (meth)acrylate-based compounds, ether group-containing (meth)acrylate-based compounds, carboxyl group-containing (meth)acrylate-based compounds, other (meth)acrylate-based compounds, styrene-based compounds, N-vinyl-based compounds, allylate-based compounds, and other compounds having one ethylenic unsaturated bond.

Examples of the monofunctional unsaturated carboxylic acid-based compounds include unsaturated carboxylic acids, such as (meth)acrylic acid, itaconic acid, crotonic acid, isocrotonic acid, fumaric acid, and maleic acid, and salts thereof and acid anhydrides thereof.

Examples of the monofunctional alkyl (meth)acrylate-based compounds include methyl (meth)acrylate, ethyl (meth)acrylate, propyl (meth)acrylate, isopropyl (meth)acrylate, n-butyl (meth)acrylate, i-butyl (meth)acrylate, t-butyl acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, isomyristyl (meth)acrylate, octadecyl (meth)acrylate, dicyclopentanyl (meth)acrylate, tridecyl (meth)acrylate, nonyl (meth)acrylate, hexadecyl (meth)acrylate, myristyl (meth)acrylate, isobornyl (meth)acrylate, cyclohexyl (meth)acrylate, norbornyl (meth)acrylate, dicyclopentenyl (meth)acrylate, dicyclopentenyloxyethyl (meth)acrylate, 1-adamantyl (meth)acrylate, 3,5,5-trimethylcyclohexyl acrylate, and 4-t-butylcyclohexyl (meth)acrylate.

Examples of the monofunctional hydroxyl group-containing (meth)acrylate-based compounds include 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, 1,6-hexanediol mono(meth)acrylate, glycerin mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-(meth)acryloyloxyethyl-2-hydroxypropyl phthalate, and (poly)alkylene glycol-modified (meth)acrylates, such as 2-ethylhexyl EO-modified (meth)acrylate, o-phenylphenol EO-modified acrylate, p-cumylphenol EO-modified (meth)acrylate, and nonylphenol EO-modified (meth)acrylate.

Examples of the monofunctional halogen-containing (meth)acrylate-based compounds include trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, and 2,4,6-tribromophenol 3EO (ethylene oxide) adduct (meth)acrylate.

Examples of the monofunctional ether group-containing (meth)acrylate-based compounds include alkoxy-based and/or phenoxy (meth)-based acrylates, such as 1,3-butylene glycol methyl ether (meth)acrylate, methoxytriethylene glycol (meth)acrylate, methoxydipropylene glycol (meth)acrylate, methoxytripropylene glycol (meth)acrylate, methoxypolypropylene glycol (meth)acrylate, ethoxydiethylene glycol (meth)acrylate, ethylcarbitol (meth)acrylate, 2-ethylhexylcarbitol (meth)acrylate, tetrahydrofurfuryl (meth)acrylate, cresyl polyethylene glycol (meth)acrylate, 2-(vinyloxyethoxy)ethyl (meth)acrylate, phenoxyethyl (meth)acrylate, p-nonylphenoxyethyl (meth)acrylate, p-nonylphenoxypolyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether acrylate, dipropylene glycol monomethyl ether (meth)acrylate, 3-methoxybutyl (meth)acrylate, methoxydiethylene glycol (meth)acrylate, methoxypropylene glycol (meth)acrylate, methoxypolyethylene glycol (meth)acrylate (for example, the number of EO repeating units: 400, 700), 2-(2-ethoxyethoxy)ethyl (meth)acrylate, 2-ethoxyethyl (meth)acrylate, 2-methoxyethyl (meth)acrylate, 3-methoxybutyl acrylate, ethoxyethyl acrylate, ethoxyethoxyethyl (meth)acrylate, butoxyethyl (meth)acrylate, alkoxylated 2-phenoxyethyl (meth)acrylate (for example, ethoxylated 2-phenoxyethyl (meth)acrylate and propoxylated 2-phenoxyethyl (meth)acrylate), alkoxylated nonylphenyl (meth)acrylate (for example, ethoxylated (4) nonylphenol acrylate), 2-phenoxyethyl (meth)acrylate, para-cumylphenoxyethylene glycol (meth)acrylate, methylphenoxyethyl acrylate, ethoxylated succinic acid (meth)acrylate, ethoxylated tribromophenyl acrylate, and ethoxylated nonylphenyl (meth)acrylate.

Examples of the monofunctional carboxyl group-containing (meth)acrylate-based compounds include β-carboxyethyl (meth)acrylate, succinic acid monoacryloyloxyethyl ester, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, and 2-(meth)acryloyloxypropyl tetrahydrohydrogen phthalate.

Examples of other monofunctional (meth)acrylate-based compounds include benzyl (meth)acrylate, N,N-dimethylaminoethyl (meth)acrylate, N,N-dimethylaminopropyl (meth)acrylate, acryloylmorpholine, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified-2-(meth)acryloyloxyethyl acid phosphate, 2-hydroxy-1-(meth)acryloxy-3-methacryloxypropane, acryoloxyethyl phthalate, 2-(meth)acryloyloxyethyl-2-hydroxyethyl phthalate, 2-(meth)acryloyloxypropyl phthalate, tricyclodecane monomethylol (meth)acrylate, (meth)acrylic acid dimer, diethylaminoethyl (meth)acrylate, 2-(meth)acryloyloxyethyl succinic acid, 2-(meth)acryloyloxyethyl hexahydrophthalic acid, 2-ethylhexyl-diglycol (meth)acrylate, aminoethyl (meth)acrylate, ethyl carbitol acrylate, ethyl diglycol acrylate, dimethylaminoethyl acrylate benzyl chloride quaternary salt, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylic acid benzoic acid ester, (2-methyl-2-ethyl-1,3-dioxolan-4-yl)methyl (meth)acrylate, 1-(meth)acryloylpiperidin-2-one, 2-(meth)acrylic acid-1,4-dioxaspiro[4,5]dec-2-ylmethyl, N-(meth)acryloyloxyethylhexahydrophthalimide, γ-butyrolactone (meth)acrylate, caprolactone-modified tetrahydrofurfuryl acrylate, imide acrylate, vinyl (meth)acrylate, and maleimide.

Examples of the monofunctional styrene-based compounds include styrene, vinyltoluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, and divinylbenzene.

Examples of the monofunctional N-vinyl-based compounds include N-vinylpyrrolidone, N-vinylformamide, N-vinylacetamide, N-vinyl-2-caprolactam, N-vinylcarbazole, and vinylmethyloxazolidinone.

Examples of the monofunctional allylate-based compounds include allyl glycidyl ether, diallyl phthalate, triallyl trimellitate, and isocyanuric acid triallylate.

Examples of other monofunctional monomers include vinyl acetate, vinyl monochloroacetate, vinyl benzoate, vinyl pivalate, vinyl butyrate, vinyl laurate, divinyl adipate, vinyl crotonate, vinyl 2-ethylhexanoate, three-membered ring compounds (such as, for example, vinylcyclopropanes, 1-phenyl-2-vinylcyclopropanes, 2-phenyl-3-vinyloxiranes, and 2,3-divinyloxiranes), and cyclic ketene acetals (such as, for example, 2-methylene-1,3-dioxepane, podioxolanes, 2-methylene-4-phenyl-1,3-dioxepane, 4,7-dimethyl-2-methylene-1,3-dioxepane, and 5,6-benzo-2-methylene-1,3-dioxepane).

The monofunctional photopolymerizable monomer contained in the ultraviolet ray-blocking ink composition is preferably a monomer having less odor. This is because the ultraviolet ray-blocking ink composition is semi-cured by photoirradiation and is not completely cured. Preferred examples of the monofunctional photopolymerizable monomers include acryloylmorpholine, N-vinylcaprolactam, and 4-hydroxybutyl acrylate.

### [1-1-3. Contents and formulations of photopolymerizable monomers, etc.]

The content of the photopolymerizable monomer(s) in the ultraviolet ray-blocking ink composition of the present invention is 55.0 mass% or more, preferably 60.0 mass% or more, and more preferably 70.0 mass% or more, and may be 80.0 mass% or more; and, on the other hand, is usually 90.0 mass% or less, and preferably 85 mass% or less. By controlling the content of the photopolymerizable monomer(s) to 55.0 mass% or more, a print layer of the ultraviolet ray-blocking ink composition can be solidified by the polymerization of the photopolymerizable monomer(s) upon ultraviolet ray irradiation.

The photopolymerizable monomer contained in the ultraviolet ray-blocking ink composition of the present invention comprises at least a polyfunctional monomer or may comprise a combination of a polyfunctional monomer and a monofunctional monomer. More specifically, a polyfunctional monomer represents 50.0 mass% or more of the photopolymerizable monomer(s), and the proportion is preferably 60.0 mass% or more, more preferably 70.0 mass% or more, and particularly preferably 80.0 mass% or more. The photopolymerizable monomer or monomers may be all polyfunctional monomers. When a polyfunctional monomer represents 50.0 mass% or more of the photopolymerizable monomer(s), a print layer of the ultraviolet ray-blocking ink composition undergoes polymerization in an accelerated manner and is easily solidified upon irradiation with ultraviolet rays. If the proportion of the polyfunctional monomer is too low, the print layer is solidified superficially but the inside of the print layer may not be solidified and may remain liquid.

### [1-2. UV absorbents]

The ultraviolet ray-blocking ink composition of the present invention includes an UV absorbent. The UV absorbent absorbs ultraviolet rays to 1) prevent the photopolymerizable monomer in the ultraviolet ray-blocking ink composition from being excessively excited and 2) inhibit part of the ultraviolet rays from reaching the base layer in a region where the ultraviolet ray-blocking ink composition has been printed. Thus, the print layer of the ultraviolet ray-blocking ink composition is polymerized and solidified by ultraviolet ray irradiation, and the base layer that is a photocurable resin is prevented from being completely cured and can stay in a semi-cured state.

For example, UV absorbents are generally classified into benzotriazole (BTZ)-based UV absorbents, hydroxyphenyltriazine (HPT)-based UV absorbents, salicylic acid-based UV absorbents, benzophenone-based UV absorbents, cyanoacrylate-based UV absorbents, and polymeric-based UV absorbents. The ultraviolet ray-blocking ink composition of the present invention may contain any type of an UV absorbent and may include one or more types of UV absorbents.

Examples of the benzotriazole (BTZ)-based UV absorbents include 2-(2-hydroxy-5-methylphenyl)benzotriazole, 2-(2-hydroxy-5-t-butylphenyl)benzotriazole, 2-(2'-hydroxy-3',5'-di-t-butylphenyl)benzotriazole, 2-(2'-hydroxy-3'-t-butyl-5'-methylphenyl)benzotriazole, 2-(3,5-di-t-pentyl-2-hydroxyphenyl-2-benzotriazole, 2-(2-benzotriazol-2-yl)-4-methyl-6-(3,4,5,6-tetrahydrophthalimidylmethyl)phenol, 2-(2-hydroxy-4-octyloxyphenyl)-2-benzotriazole, and 2-(2-hydroxy-5-t-octylphenyl)-2-benzotriazole. The benzotriazole (BTZ)-based UV absorbents may also be purchased from the market and are available as, for example, Sumisorb 200, Sumisorb 250, Sumisorb 300, Sumisorb 340, and Sumisorb 350 (Sumitomo Chemical Co., Ltd.), TINUVIN PS, TINUVIN 99-2, TINUVIN 234, TINUVIN 320, TINUVIN 326, TINUVIN 328, TINUVIN 329, TINUVIN 384, TINUVIN 384-2, TINUVIN 571, TINUVIN 900, TINUVIN 928, and TINUVIN 1130 (BASF SE), ADK STAB LA-32, ADK STAB LA-29, ADK STAB LA-31, ADK STAB LA-31RG, ADK STAB LA-31G, ADK STAB LA-36, and ADK STAB LA-36RG (ADEKA CORPORATION), and SEESORB 701, SEESORB 703, SEESORB 704, SEESORB 706, SEESORB 707, and SEESORB 709 (SHIPRO KASEI KAISHA, LTD.).

Examples of the hydroxyphenyltriazine (HPT)-based UV absorbents include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2-(2-hydroxy-4-[1-octyloxycarbonylethoxy]phenyl)-4,6-bis(4-phenylphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, and 2,4-diphenyl-6-(2-hydroxy-4-benzyloxyphenyl)-1,3,5-triazine. The hydroxyphenyltriazine (HPT)-based UV absorbents may also be purchased from the market and are available as, for example, TINUVIN 400, TINUVIN 405, TINUVIN 460, TINUVIN 477, TINUVIN 479, TINUVIN 777, and TINUVIN 1577ED (BASF SE), and ADK STAB LA-F70 (ADEKA CORPORATION).

Examples of the salicylic acid-based UV absorbents include phenyl salicylate, p-t-butylphenyl salicylate, and 2-4-di-t-butylphenyl-3,5-di-t-butyl-4-hydroxybenzoate. The salicylic acid-based UV absorbents may also be purchased from the market and are available as, for example, Sumisorb 400 (Sumitomo Chemical Co., Ltd.), and SEESORB 201, SEESORB 202, and SEESORB 712 (SHIPRO KASEI KAISHA, LTD.).

Examples of the benzophenone-based UV absorbents include 2,4-dihydroxybenzophenone, 2-hydroxy-4-methoxybenzophenone, 2,2'-dihydroxy-4-methoxy-benzophenone, 2,2',4,4'-tetrahydroxybenzophenone, 2,2'-dihydroxy-4,4'-dimethoxybenzophenone, 2-hydroxy-4-n-octoxybenzophenone, 2-hydroxy-4-dodecyloxybenzophenone, 2-hydroxy-4-octadecyloxybenzophenone, 2-hydroxy-4-benzyloxybenzophenone, and 1,4-bis(4-benzoyl-3-hydroxyphenoxy)butane. The benzophenone-based UV absorbents may also be purchased from the market, with examples including Sumisorb 130 (Sumitomo Chemical Co., Ltd.), ADK STAB 1413 (ADEKA CORPORATION), and SEESORB 100, SEESORB 101, SEESORB 106, SEESORB 107, SEESORB 101S, SEESORB 102, SEESORB 103, SEESORB 105, and SEESORB 151 (SHIPRO KASEI KAISHA, LTD.).

Examples of the cyanoacrylate-based UV absorbents include ethyl-2-cyano-3,3-diphenylacrylate and 2-ethylhexyl 2-cyano-3,3-diphenylacrylate. The cyanoacrylate-based UV absorbents may also be purchased from the market, with examples including SEESORB 501 and SEESORB 502 (SHIPRO KASEI KAISHA, LTD.), and Uvinul 3039 and Uvinul 3035 (BASF SE).

The polymeric-based UV absorbents may be copolymers of an acrylic monomer that has, in a side chain, a skeleton capable of acting as an UV absorbent (such as the benzophenone-based, the benzotriazole-based, or the triazine-based described hereinabove) and other ethylenic unsaturated compound (such as acrylic acid, methacrylic acid, or a derivative thereof, styrene, or vinyl acetate). Examples of the polymeric-based UV absorbents include polymeric UV absorbents for coatings: ULS-700, ULS-1700, ULS-383MA, ULS-1383MA, ULS-383MG, ULS-385MG, ULS-1383MG, ULS-1385MG, ULS-635MH, ULS-933LP, ULS-935LH, ULS-1935LH, HC-935UE, XL-504, XL-524, XL-547, XL-729, and XL-730 (Ipposha Oil Industries Co., Ltd.), and polymeric UV absorbing resin paints NCI-905-20EM and NCI-905-20EMA (polymeric UV absorbents made of a copolymer of a styrene monomer and a benzotriazole-based monomer) (NIKKO-KAKEN CORPORATION).

The content of the UV absorbent in the ultraviolet ray-blocking ink composition of the present invention is 3.0 mass% or more, preferably 4.0 mass% or more; and, on the other hand, is less than 15.0 mass%, preferably 12.0 mass% or less. When the content of the UV absorbent is 3.0 mass% or more, the ultraviolet ray-blocking performance is sufficient, and excessive polymerization of the ultraviolet ray-blocking ink composition itself is inhibited and the base layer under the print layer of the ultraviolet ray-blocking ink composition is appropriately shielded from ultraviolet ray irradiation. When, on the other hand, the content of the UV absorbent is less than 15.0 mass%, ultraviolet rays appropriately reach the base layer through the print layer of the ultraviolet ray-blocking ink composition and can solidify the base layer in a semi-cured state.

The UV absorbent in the ultraviolet ray-blocking ink composition of the present invention is distinguished from a photostabilizer. A photostabilizer is an agent that scavenges radicals generated by ultraviolet ray irradiation and is different from an UV absorbent that suppresses the generation of radicals itself. The ultraviolet ray-blocking ink composition of the present invention includes at least an UV absorbent and may also include a photostabilizer together with the UV absorbent.

Examples of the photostabilizers include hindered amine-based compounds (HALS: hindered amine photostabilizers); specifically, 4-berzoyloxy-2,2,6,6-tetramelthypiperidine, bis-(2,2,6,6-tetramethyl-4-piperidyl) malonate, bis-(2,2,6,6-tetramethyl-4-piperidyl) phthalate, 2,2,6,6-tetramethyl-4-piperidyl benzoate, 4-amino-2,2,6,6-tetramethyl-piperidine, 2,2,6,6-tetramethyl-4-pipedyl) sepacate, bis-(2,2,6,6-tramethyl-4-methylpiperidyl) sepacate, di-(1,2,2,6,6-pentamethyl-4-piperidyl)-2-n-butyl-2-(3,5-di-t-butyl-4-hydroxybenzyl) malonate, bis-(2,2,6,6-tetramethyl-4-carbonyloxypiperidino)-p-dimethylbenzil, 2,2,4,4-tetramethyl-7-oxa-3,20-diaza-21-oxo-disbiro[5·1·9·19]heneicone, pis-(2,2,6,6-tetramethyl-4-piperidinyl) sepacate, dimethyl succinate, 2-(4-hydroxy-2,2,6,6-tetramethyl-1-piperidinyl)ethynol condensate, and [(6-(1,1,3,3-tetramethylbutyl)imino)-1,3,5-triazine-2,4-diyl-(4-(2,2,6,6-tetramethylpiperidinyl)imino)-hexamethylene-(4-(2,2,6,6-tetramethylpiperidinyl)imino)].

### [1-3. Non-polymerizable materials]

The ultraviolet ray-blocking ink composition of the present invention contains a non-polymerizable material together with the photopolymerizable monomer and the UV absorbent. By adding a non-polymerizable material to the ultraviolet ray-blocking ink composition, the ink composition that has been solidified by the polymerization of the photopolymerizable monomer can be reduced in hardness and preferably the solidified ink composition can be rendered "brittle". As a result, the solidified print layer can be easily removed or stripped from the printed workpiece. The non-polymerizable material preferably comprises a combination of a non-polymerizable high-molecular compound and a non-polymerizable low-molecular compound. Such non-polymerizable materials allow for easy control of the viscosity of the ultraviolet ray-blocking ink composition.

### [1-3-1. High-molecular compounds as non-polymerizable materials]

The high-molecular compound as the non-polymerizable material is preferably one that does not have a crosslinking group or the like and does not react with or bond to other components (in particular, the photopolymerizable monomer) of the ultraviolet ray-blocking ink composition. The high-molecular compound as the non-polymerizable material is preferably a thermoplastic resin, with examples including polyacrylic acid, polymethacrylic acid, polymethacrylic acid ester, polyethylacrylic acid, styrenebutadiene copolymer, polybutadiene, acrylonitrile-butadiene copolymer, chloroprene copolymer, fluororesin, vinylidene fluoride, polyolefin resin, cellulose, styrene-acrylic acid copolymer, styrene-methacrylic acid copolymer, polystyrene, styrene-acrylamide copolymer, polyisobutyl acrylate, polyacrylonitrile, polyvinyl acetate, polyvinyl acetal, polyamide, rosin-based resin, polyethylene, polycarbonate, vinylidene chloride resin, cellulose-based resin, vinyl acetate resin, ethylene-vinyl acetate copolymer, vinyl acetate-acrylic copolymer, vinyl chloride resin, polyurethane, and rosin ester. Specific examples of relatively low-molecular thermoplastic resins include polyethylene waxes, montan waxes, alcohol waxes, synthetic oxide waxes, α-olefin-maleic anhydride copolymers, animal and vegetable-based waxes, such as carnauba waxes, lanolins, paraffin waxes, and microcrystalline waxes.

### [1-3-2. Low-molecular compounds as non-polymerizable materials]

The low-molecular compound as the non-polymerizable material is preferably a low-molecular compound that does not react with other components of the ultraviolet ray-blocking ink composition. Suitable examples thereof include 1) substances having sublimation properties (sublimable substances) and 2) terpenes.

Examples of the sublimable substances include alizarin, alloxan, amantadine, (3α,5α)-androst-16-en-3-ol, anthraquinone, caffeine, chloranil, chloroacetamide, p-dichlorobenzene, emodin, homoeriodictyol, cubane, cysteamine, aesculetin, guanine, hexachloroethane, isatin, lumiflavin, maleic anhydride, 1,4-naphthoquinone, nimbiol, phenazine, phthalimide, 2,5-piperazinedione, 1H-purine, purpurin, pyrene, mordant violet 26 (quinalizarin), p-benzoquinone, saccharin, solasodine, succinic anhydride, thebaine, xanthine, and camphor (d-canphor).

Examples of the terpenes include monoterpene hydrocarbons, such as α-pinene, β-pinene, dipentene, limonene, turpentine, phellandrene, α-terpinene, γ-terpinene, terpinolene, myrcene, alloocimene, camphene, bornylene, para-menthene-1, para-menthene-2, para-menthene-3, para-menthadiene, para-menthane, 2-carene, 3-carene, and thujane; monoterpene alcohols, such as α-terpineol, β-terpineol, γ-terpineol, 4-terpineol, para-menthenol, para-menthanol, geraniol, linalool, nerol, citronellol, allocimenol, myrcenol, carveol, menthol, borneol, isoborneol, fenchyl alcohol, and verbenol; terpene aldehydes, such as citral and citronellal; terpene ketones, such as isopulegone, carvone, and camphor (camphor white oil); terpene diols, such as para-menthanediol; terpene ethers, such as 1,4-cineole and 1,8-cineole; sesquiterpene hydrocarbons, such as longifolene, caryophyllene, cadinene, thujopsene, cedrene, clovene, and longipinene; and sesquiterpene alcohols, such as elemol, cadinol, and eudesmol.

It is sometimes preferable that the ultraviolet ray-blocking ink composition contain menthol that is a low-molecular compound serving as the non-polymerizable material.

### [1-3-3. Contents and formulations of non-polymerizable materials, etc.]

The content of the non-polymerizable material in the ultraviolet ray-blocking ink composition is preferably determined so that the non-polymerizable material can impart "brittleness" to a solidified product that results when the ultraviolet ray-blocking ink composition is solidified by ultraviolet ray irradiation. Thus, the ultraviolet ray-blocking ink composition contains the non-polymerizable material in an amount of 10.0 mass% or more, preferably 15.0 mass% or more, and sometimes 20.0 mass% or more. If, on the other hand, the content of the non-polymerizable material is too high, the ultraviolet ray-blocking ink composition is increased in viscosity or part of the non-polymerizable material is not dissolved in the ink composition, which may destabilize inkjet printing (may deteriorate discharge stability). Thus, the content is controlled to less than 30.0 mass%.

Because the high-molecular compounds as the non-polymerizable materials are particularly likely to cause an increase in the viscosity of the ultraviolet ray-blocking ink composition, it is preferable to adjust the amount of the high-molecular compound by combining it with the low-molecular compound.

### [1-4. Additional components]

The ultraviolet ray-blocking ink composition of the present invention may contain a surface conditioner for controlling the surface tension. As will be described later, it is sometimes preferable that the ultraviolet ray-blocking ink composition have a high surface tension, and thus a surface conditioner for increasing the surface tension may be added. Examples of the surface conditioners for increasing the surface tension include amine compounds, polyether macromer-modified polyacrylates (available as BYK3560 (BYK-Chemie GmbH)), and polyether silicone macromer-modified polyacrylates (available as BYK3565 (BYK-Chemie GmbH)). When the ultraviolet ray-blocking ink composition contains a surface conditioner, the content thereof is preferably in the range of 0.01 to 1.0 mass%.

The ultraviolet ray-blocking ink composition of the present invention may contain a colorant (preferably a dye). The purpose of this is to increase the visibility of regions printed with the ultraviolet ray-blocking ink composition and thereby to make it easier to identify sections to be removed. When the ultraviolet ray-blocking ink composition contains a dye, the content thereof is preferably in the range of 0.01 to 2.0 mass%.

The ultraviolet ray-blocking ink composition of the present invention does not usually include a solvent; but may contain a small amount (for example, 5 mass% or less of the ink composition) of an organic solvent when, for example, viscosity control is required.

### [1-5. Properties of ultraviolet ray-blocking ink compositions]

Because the ultraviolet ray-blocking ink composition of the present invention is printed by an inkjet method, the viscosity thereof (25°C) is preferably 10 cps or more, more preferably 12 cps or more; and, on the other hand, is preferably about 30 cps or less. The viscosity is a value measured with, for example, an E-type viscometer (25°C, rotor rotational speed: 10 rpm).

It is sometimes preferable that the ultraviolet ray-blocking ink composition of the present invention have a high surface tension. The ultraviolet ray-blocking ink composition of the present invention is sometimes printed on a liquid film or layer (base layer). In such cases, the ultraviolet ray-blocking ink composition with a high surface tension exhibits low compatibility with the liquid film or layer and does not mix with the liquid film or layer (base layer). This enables selective printing of the ultraviolet ray-blocking ink composition on desired regions, and the regions can be selectively shielded from ultraviolet rays.

The surface tension of the ultraviolet ray-blocking ink composition usually tends to be increased when the photopolymerizable monomer contained in the composition has a polar group (such as a hydroxy group, an amino group, or an aromatic group).

### [1-6. Production of ultraviolet ray-blocking ink compositions]

The ultraviolet ray-blocking ink composition of the present invention may be produced in any manner. For example, the ultraviolet ray-blocking ink composition may be obtained by admixing, preferably dissolving, the non-polymerizable material into the photopolymerizable monomer, and further mixing the UV absorbent and other components.

### [2. Methods for manufacturing substrates having an embossed surface]

A method of the present invention for manufacturing a substrate having an embossed surface includes: 1) a coating step of applying a composition including a photopolymerizable compound to a substrate surface to form a coating film; 2) a printing step of printing by inkjet an ultraviolet ray-blocking ink composition onto the uncured coating film including a photopolymerizable compound that has been spread on the substrate; 3) an irradiation step of applying ultraviolet rays to the coating film printed with the ultraviolet ray-blocking ink composition; and 4) a removal step of removing the coating film in a region in which the ultraviolet ray-blocking ink composition has been printed; and may further include, for example, 5) a finishing step of, for example, forming an additional layer on the surface of the embossed structure.

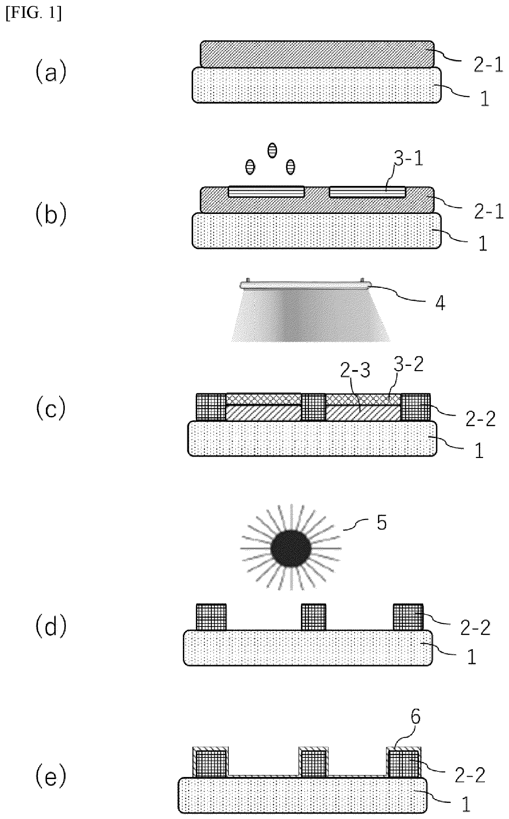

Hereinbelow, the method for manufacturing a substrate having an embossed surface will be described with reference to FIG. 1.

### [2-1. Coating step]

The coating step is a step of coating a surface of a substrate (1) with a coating film (2-1) (see FIG. 1(a)). The substrate (1) may be any member to be furnished with an embossed structure on its surface, and the material thereof is not particularly limited. Examples include, but are not particularly limited to, plastics, metals, wood, paper, cement, gypsum, rocks, glass, and ceramics. It is sometimes preferable that the substrate surface to be furnished with an embossed structure have been surface-treated to enhance wettability. The purpose of this is to facilitate the formation of a coating film on the surface of the substrate.

### [2-1-1. Photocurable resin compositions that are applied]

The coating film (2-1) formed on the surface of the substrate (1) is preferably made of a photocurable resin composition. The photocurable resin composition includes a photopolymerizable compound (preferably a photocurable monomer or oligomer) and preferably further includes a photopolymerization initiator, and may include a filler and a surface conditioner.

The photopolymerizable compound contained in the photocurable resin composition is preferably a photocurable resin, with examples including photocurable diallyl phthalate resins, epoxy resins, unsaturated polyester resins, polyurethane resins, and acrylic resins. In particular, examples of radically polymerizable resins include diallyl phthalate resins, vinyl monomers, and acrylic resins (acrylate monomers, epoxy acrylates, urethane acrylates, polyester acrylates, polyether acrylates, amino acrylates, silicone acrylates, polyisoprene acrylates, and polybutadiene acrylates). The content of the photopolymerizable compound in the photocurable resin composition is 70 mass% or more, preferably 75 mass% or more as a guideline; and, on the other hand, is 95 mass% or less, more preferably 90 mass% or less as a guideline.

The photocurable resin composition may include one, or two or more photopolymerization initiators. Examples of the photopolymerization initiators include benzophenone, diethylthioxanthone, 2-methyl-1-(4-methylthio)phenyl-2-morpholinopropan-1-one, 4-benzoyl-4'-methyldiphenyl sulfide, 1-chloro-4-propoxythioxanthone, isopropylthioxanthone, 2-hydroxy-2-methyl-1-phenylpropan-1-one, 1-hydroxycyclohexyl phenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propan-1-one, 2,2-dimethyl-2-hydroxyacetophenone, 2,2-dimethoxy-2-phenylacetophenone, 2,4,6-trimethylbenzyl-diphenylphosphine oxide, and 2-benzyl-2-dimethylamino-1-(morpholinophenyl)-butan-1-one. Such photopolymerization initiators may also be purchased from the market and are available under the product names of, for example, IRGACURE 907, IRGACURE 369, IRGACURE 184, IRGACURE 379, and IRGACURE 819 (all from BASF SE), and DETX (Lamberti).

The content of the photopolymerization initiator in the photocurable resin composition that is applied may be determined in accordance with a desired curing rate of the photocurable resin composition, but as a guideline, the content is preferably 1 mass% or more, more preferably 3 mass% or more; and is preferably 10 mass% or less, more preferably 7 mass% or less.

The photocurable resin composition preferably has a low surface tension; and thus may include a surface conditioner for lowering the surface tension. Such a surface conditioner enhances leveling properties and slipping properties of the photocurable resin composition. Examples of the surface conditioners include silicone-based surface conditioners, fluorine-based surface conditioners, acrylic-based surface conditioners, and acetylene glycol-based surface conditioners. Specific examples of the surface conditioners for lowering the surface tension include BYK series (such as BYK377) manufactured by BYK-Chemie GmbH, TEGO series manufactured by EVONIK Industries AG, and POLYFLOW series manufactured by KYOEISHA CHEMICAL Co., LTD. When the photocurable resin composition contains a surface conditioner, the content thereof is preferably in the range of 0.01 to 1.0 mass%.

By adding a filler to the photocurable resin composition, properties (such as hardness) of cured products can be adjusted. For example, aluminum oxide or the like may be added to increase the wear resistance of cured products; talc may be added to control the deformability (rheology); silica may be added to reduce the brittleness; calcium carbonate may be added as a bulk filler; and colorants may be added to color cured products. Furthermore, the photocurable resin composition, by containing a thixotropic agent, can easily maintain the shape of a coating film in an uncured state, which sometimes facilitates the formation of an embossed structure with a desired shape.

The photocurable resin composition may contain a matting agent. A matting agent is an agent for finely roughening (matte finishing) the surface of a cured product; and examples thereof include resin beads and inorganic beads, such as silica and aluminum oxide.

The photocurable resin composition usually does not include a solvent (a component that is removed after curing); however, a small amount of a solvent may be added for the purpose of, for example, obtaining coating properties.

### [2-1-2. Coating films]

The thickness of the coating film (2-1) formed on the surface of the substrate (1) may be determined in accordance with the desired shape of the embossed surface to be formed. A larger thickness of the coating film (2-1) allows a larger difference in height to be formed in the embossed surface. The thickness of the coating film (2-1) may be 30 µm or more, may be 100 µm or more, or may be about 200 µm. The upper limit of the thickness of the coating film (2-1) is appropriately determined in accordance with the use application of the embossed-surface substrate to be manufactured.

It should be noted that it is preferable that the photocurable resin composition forming the coating film (2-1), by being completely photocured, give a cured product (2-2) having a pencil hardness of 2H or above. The specific hardness of the cured product (2-2) may be controlled in accordance with the use application of the embossed-surface substrate to be manufactured.

### [2-2. Printing step]

The printing step is a step of printing by inkjet an ultraviolet ray-blocking ink composition (3-1) onto the coating film (2-1) formed on the surface of the substrate (1) (see FIG. 1(b)). The ultraviolet ray-blocking ink composition is preferably one described in [1. Ultraviolet ray-blocking ink compositions] hereinabove.

The technique for inkjet printing is not particularly limited. For example, the inkjet printing mode may be any of multi-pass mode (serial head mode) and single-pass mode (line head mode).

The ultraviolet ray-blocking ink composition is printed in accordance with the desired embossed shape in view of the fact that regions where the composition is printed will become concave in the resultant embossed shape. The amount of the ultraviolet ray-blocking ink composition applied for printing per unit area is determined so that the amount applied is sufficient to completely cover the desired printing regions and that the coating film (2-1) in the regions where the ultraviolet ray-blocking ink composition (3-1) is printed will be semi-cured. The curing reaction of the coating film (2-1) will not proceed easily when the amount applied for printing per unit area is large; and the curing reaction will proceed easily when the amount is small.

### [2-3. Irradiation step]

The irradiation step is a step of applying ultraviolet rays to the coating film (2-1) printed with the ultraviolet ray-blocking ink composition (3-1) (see FIG. 1(c)). An exposure machine (4) for applying ultraviolet rays is not particularly limited and may be any exposure machine capable of applying a predetermined amount of ultraviolet rays, but, in view of productivity, is preferably one capable of applying a predetermined amount of ultraviolet rays in a short time. The regions of the coating film (2-1) that are not covered by printing of the ultraviolet ray-blocking ink composition (3-1) are directly exposed to ultraviolet rays and thus sufficiently photocured to give a completely cured product (2-2). On the other hand, the regions of the coating film (2-1) that are covered by printing of the ultraviolet ray-blocking ink composition (3-1) are exposed to ultraviolet rays through the print layer of the ultraviolet ray-blocking ink composition (3-1) and are thus not completely photocured but are solidified as a semi-cured product (2-3). The ultraviolet ray-blocking ink composition (3-1) itself forms a cured product (3-2) by being irradiated with ultraviolet rays.

The amount of ultraviolet rays applied to the coating film should be sufficient to cure the coating film (2-1) into a completely cured product (2-2); however, excessive exposure to ultraviolet rays may cause the semi-cured product (2-3) to be further photocured into a completely cured product. In view of this, it is preferable that the amount of exposure to ultraviolet rays be an amount that is necessary and sufficient to ensure that the coating film (2-1) in the regions free from the print layer of the ultraviolet ray-blocking ink composition (3-1) will be a completely cured product (2-2). That is, the amount of exposure to ultraviolet rays is determined appropriately in accordance with the photocurability of the ultraviolet ray-blocking ink composition (3-1) and the printed amount of the ultraviolet ray-blocking ink composition (3-1).

The hardness of the cured product (2-2) of the coating film (2-1) may vary depending on the use application of the embossed matter, but is usually preferably 2H or above in terms of pencil hardness. On the other hand, the hardness of the semi-cured product (2-3) of the coating film (2-1) should be lower than the hardness of the cured product (2-2). That is, the hardness of the semi-cured product (2-3) will be lower than 2H in pencil hardness, but may be higher depending on the hardness of the cured product (2-2). Specifically, a) the hardness of the semi-cured product (2-3) may be high when the hardness of the cured product (2-2) is high, and b) the hardness of the semi-cured product (2-3) may be high when the means for removal in the subsequent removal step has high removing ability (peeling ability).

### [2-4. Removal step]

The removal step is a step of removing the semi-cured product (2-3) and the cured product (3-2) formed in the irradiation step (see FIG. 1(d)). On the other hand, the cured product (2-2) of the coating film (2-1) is not removed by the removal step due to its high hardness. The removal is performed mechanically and is preferably carried out by rubbing the coating film with a brush (5) or a pad. For example, the material of the brush (5) or the pad may be steel, brass, nylon fibers, polyester fibers, or the like, but is not particularly limited. Alternatively, the removal may be performed in such a manner that the semi-cured product (2-3) and the cured product (3-2) are removed by high-pressure air jetting, high-pressure water jetting, or the like; or the semi-cured product (2-3) and the cured product (3-2) are removed by being peeled off with an adhesive roller or an adhesive tape.

As a result of the removal of the semi-cured product (2-3) and the cured product (3-2), the removal sites are left as concaves and an embossed structure is formed on the surface of the substrate (1).

### [2-5. Finishing step]

On the embossed structure formed on the surface of the substrate (1), an optional coating layer (6) may be formed to impart weatherability, rub resistance, wear resistance, and solvent resistance (see FIG. 1(e)). Furthermore, the embossed structure may be adjusted to a desired appearance (such as luminance, brightness, or chroma) by, for example, forming a varnish coating film. Any other finishing treatments may be performed.

Articles that have an embossed shape manufactured as described above may be used as so-called decorative boards for any building materials (such as floor materials, wall materials, and flooring), baseboards, furniture, and the like.

### Examples

The present invention will be described below with reference to Examples, but the present invention should not be interpreted as being limited to those Examples. In the description of Examples, "%" means "mass%" and "parts" means "parts by mass" unless otherwise specified.

### [A. Preparation of ultraviolet ray-blocking ink compositions]

The materials used in the preparation of ultraviolet ray-blocking ink compositions are described below.

### [A-1. Photopolymerizable monomers]

·1,6-Hexanediol diacrylate:
·Neopentyl glycol PO-modified diacrylate ((PO)NPGDA): Miramer M216 (Toyo Chemicals Co., Ltd.)
·Trimethylolpropane EO-modified triacrylate ((EO)TMPTA): Miramer M3130 (Toyo Chemicals Co., Ltd.)
·Acryloylmorpholine:
·N-vinylcaprolactam:
·4-Hydroxybutyl acrylate:

### [A-2. Non-polymerizable materials]

·Acrylic polymer: DEGALAN LP 66/02N (EVONIK Industries AG), glass transition temperature: 75°C, molecular weight (DIN standards): 60000
·L-Menthol:

### [A-3. UV absorbents, etc.]

·Hydroxyphenyl triazine (HPT)-based UV absorbent: TINUVIN 400 (BASF SE)
·Benzotriazole (BZT)-based UV absorbent: TINUVIN 384 (BASF SE)
·Hindered amine-based photostabilizer (HALS): TINUVIN 123 (BASF SE)

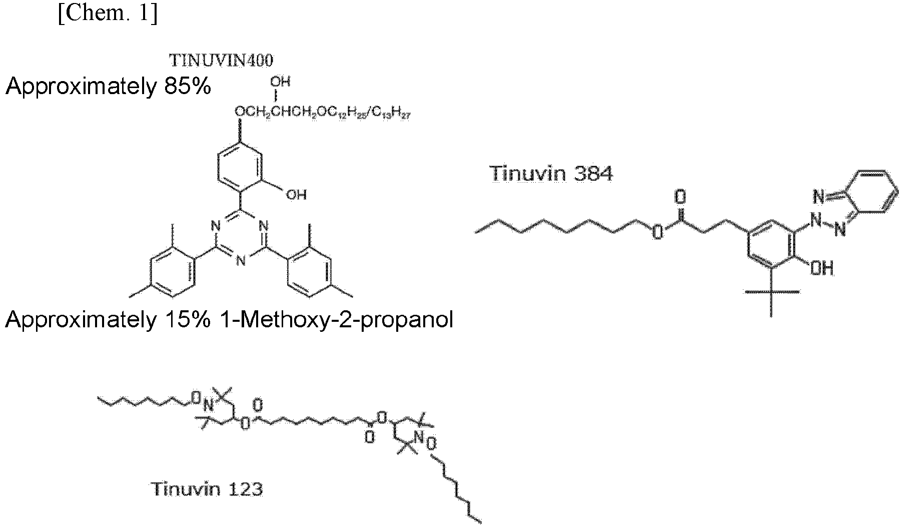

### [A-4. Process of preparation of ultraviolet ray-blocking ink compositions]

The photopolymerizable monomers, the non-polymerizable materials, and the UV absorbent or the photostabilizer were mixed according to the formulations described in Table 2 and Table 3 to give ultraviolet ray-blocking ink compositions of Examples 1 to 9 and Comparative Examples 1 to 7. The acrylic polymer (DEGALAN LP 66/02N) as the non-polymerizable material was mixed with the other materials after being dissolved into the photopolymerizable monomers by heating.

### [B. Manufacturing of substrates having an embossed surface]

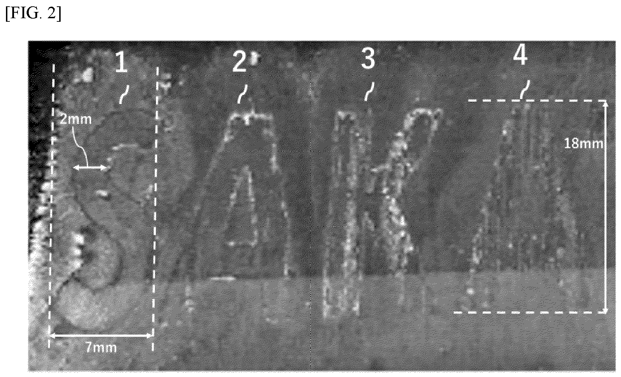

MDF (medium density fiberboards) were provided as substrates; and a photocurable resin composition having the formulation described in Table 1 was applied to a surface of each substrate using a roll coater to form a coating film (film thickness: 50 µm). The ultraviolet ray-blocking ink compositions prepared were each printed by inkjet onto the coating film (still uncured). The printing was performed using a UV inkjet ink printing evaluation device (300 dpi, liquid droplet volumes (5 pL to 50 pL)) equipped with Ricoh GEN6 head, and alphabet characters were drawn as illustrated in FIG. 2. The ink composition was printed by inkjet in a single pass, 80 to 100% solid printing, so as to cover completely the regions to be printed. After the printing, ultraviolet rays were applied at 100 mJ/cm². The resin surface after curing was brushed with a plastic brush to strip and remove the resins in the printed sections.

**[Table 1]**

| Ingredients | | Amounts added |
|---|---|---|
| DAP_30%DPGDA | Diallyl phthalate resin_30% DPGDA diluent varnish | 25.0% |
| Miramer PE210 | Epoxy oligomer | 29.5% |
| Miramer PS420 | Ester oligomer | 30.0% |
| GANZPEARL GM-2001 | Acrylic beads | 10.0% |
| I-184(1104) | Photopolymerization initiator | 5.0% |
| BYK377 | Surface conditioner | 0.5% |
| Total | | 100.0% |

### [C. Evaluation]

### [C-1. Viscosity of the ultraviolet ray-blocking ink compositions]

The viscosity (cps) of the ink compositions obtained in Examples and Comparative Examples was measured using an E-type viscometer (product name: RE100L viscometer, manufactured by Toki Sangyo Co., Ltd.) at a temperature of 25°C and a rotor rotational speed of 10 rpm.

### [C-2. Embossing suitability: strippability]

The strippability was evaluated based on the brushing workability and the stripped condition according to the following criteria.
⊚: The printed sections were exclusively scraped off easily and cleanly.
∘: The printed sections were exclusively scraped off cleanly.
Δ: Part of the printed sections was not scraped off and remained.
×: The printed sections were scarcely scraped off or regions were removed more than necessary.

### [C-3. Embossing suitability: shape]

The condition after the brushing was visually observed and evaluated according to the following criteria.
∘: The characters defined by the concaves were beautifully expressed as drawn.
×: The characters defined by the concaves were not produced as drawn and were filled or enlarged compared to the drawing.

### [C-4. Discharge stability]

∘: The printing was not disturbed and the ink was ejected stably.
Δ: The printing was slightly disturbed but the ink ejection was substantially stable.
×: The printing was disturbed or the ink was not ejected stably.

**[Table 2]**

| | | Examples | | | | | | | | |
|---|---|---|---|---|---|---|---|---|---|---|
| | | 1 | 2 | 3 | 4 | 5 | 6 | 7 | 8 | 9 |
| Photopolymeriz able monomers | 1,6-Hexanediol diacrylate | 41.5 % | 41.5 % | 64.0 % | 41.5 % | 41.5 % | 51.5 % | 51.5 % | 51.5 % | 51.5 % |
| | (PO)NPGDA | 40.0 % | 40.0 % | 5.0% | 42.0 % | 34.0 % | | | | |
| | (EO)TMPTA | | | | | | | | | 30.0 % |
| | Acryloylmorpho line | | | | | | 30.0 % | | | |
| | N-vinylcaprolacta m | | | | | | | 30.0 % | | |
| | 4-Hydroxybutyl acrylate | | | | | | | | 30.0 % | |
| Non-polymerizable materials | DEGALAN LP 66/02N | 2.5% | 2.5% | 5.0% | 2.5% | 2.5% | 2.5% | 2.5% | 2.5% | 2.5% |
| | L-menthol | 10.0 % | 10.0 % | 20.0 % | 10.0 % | 10.0 % | 10.0 % | 10.0 % | 10.0 % | 10.0 % |
| UV absorbents | TINUVIN400 | 6.0% | | 6.0% | 4.0% | 12.0 % | 6.0% | 6.0% | 6.0% | 6.0% |
| | TINUVIN384 | | 6.0% | | | | | | | |
| Photostabilizer | TINUVIN123 | | | | | | | | | |
| Total | | 100.0 % | 100.0 % | 100.0 % | 100.0 % | 100.0 % | 100.0 % | 100.0 % | 100.0 % | 100.0 % |
| Viscosity (cps) | E-type viscometer | 17 | 16 | 21 | 15 | 20 | 16 | 12 | 14 | 22 |
| Embossing suitability | Strippability | ⊚ | ⊚ | ⊚ | ○ | ○ | ○ | ○ | ○ | ○ |
| | Shape | ○ | ○ | ○ | ○ | ○ | ○ | ○ | ○ | ○ |
| Discharge stability | | ○ | ○ | ○ | ○ | ○ | ○ | ○ | ○ | ○ |

**[Table 3]**

| | | Comparative Examples | | | | | | |
|---|---|---|---|---|---|---|---|---|
| | | 1 | 2 | 3 | 4 | 5 | 6 | 7 |
| Photopolymerizabl e monomers | 1,6-Hexanediol diacrylate | 54.0% | 41.5% | 45.5% | 45.5% | 10.0% | 74.0% | 74.0% |
| | (PO)NPGDA | 5.0% | 40.0% | 40.0% | 27.0% | | 20.0% | 15.0% |
| | (EO)TMPTA | | | | | | | |
| | Acryloylmorpholin e | | | | | 71.5% | | |
| | N-vinylcaprolactam | | | | | | | |
| | 4-Hydroxybutyl acrylate | | | | | | | |
| Non-polymerizable materials | DEGALAN LP 66/02N | 5.0% | 2.5% | 2.5% | 2.5% | 2.5% | | |
| | L-menthol | 30.0% | 10.0% | 10.0% | 10.0% | 10.0% | | 5.0% |
| UV absorbents | TINUVIN400 | 6.0% | | 2.0% | 15.0% | 6.0% | 6.0% | 6.0% |
| | TINUVIN384 | | | | | | | |
| Photostabilizer | TINUVIN123 | | 6.0% | | | | | |
| Total | | 100.0% | 100.0 % | 100.0 % | 100.0 % | 100.0 % | 100.0 % | 100.0 % |
| Viscosity (cps) | E-type viscometer | 23 | 17 | 14 | 22 | 21 | 8 | 8 |
| Embossing suitability | Strippability | Evaluatio n failed. | × | × | × | × | Δ | Δ |
| | Shape | Evaluatio n failed. | × | × | × | × | ○ | ○ |
| Discharge stability | | × | ○ | ○ | ○ | ○ | Δ | Δ |

As described in Comparative Example 1 in Table 3, the ultraviolet ray-blocking ink composition containing a total of 35.0 mass% of non-polymerizable materials did not exhibit discharge stability in inkjet printing and could not be printed as designed because part of the non-polymerizable materials was not sufficiently compatibilized in the ink composition and was not dissolved in the ink composition. As a result, an embossed shape could not be created. In contrast, as described in Example 3 in Table 2, the ultraviolet ray-blocking ink composition containing a total of 25.0 mass% of non-polymerizable materials exhibited discharge stability in inkjet printing and was also shown to have superior embossing suitability.

As described in Comparative Example 2 in Table 3, the ultraviolet ray-blocking ink composition that contained a photostabilizer but contained no UV absorbents failed to give an embossed shape because the embossing resulted in the coating film being completely cured and the coating film could not be scraped off by brushing. Similarly, as described in Comparative Example 3 in Table 3, the ultraviolet ray-blocking ink composition containing 2.0 mass% of an UV absorbent failed to give an embossed shape because the embossing resulted in the coating film being completely cured and the coating film could not be scraped off by the brushing removal operation. Specifically, as shown in FIG. 2 (4) illustrating the printed character "A", Comparative Examples 2 and 3 resulted in a failure to scrape off the portions of the coating film corresponding to the character and the character was difficult to recognize.

On the other hand, as described in Comparative Example 4 in Table 3, the ultraviolet ray-blocking ink composition containing 15.0 mass% of an UV absorbent gave an embossed shape in which the coating film was not sufficiently cured and remained liquid, and the uncured portions of the coating film could not be removed by the brushing removal operation (FIG. 2 (1)).

In contrast, as described in Examples 1 to 9 in Table 2, the ultraviolet ray-blocking ink compositions containing 3.0 to 12.0 mass% of an UV absorbent gave an embossed shape in which the coating film was solidified in a semi-cured state and was successfully removed by brushing, and the embossed shape was faithful to the design. As demonstrated here, the use of an ultraviolet ray-blocking ink composition containing an appropriate amount of an UV absorbent enables the production of an embossed shape. Specifically, as shown in FIG. 2 (2) illustrating the printed character "A", Examples 1 to 9 were successful in selectively scraping off the portions of the coating film corresponding to the character and produced a clearly recognizable character.

Furthermore, as described in Comparative Example 5 in Table 3, the ultraviolet ray-blocking ink composition containing 10.0 mass% of a functional monomer and 71.5 mass% of a monofunctional monomer as photopolymerizable monomers gave an embossed shape in which the superficial layer of the coating film was cured to an advanced stage and the cured product could not be removed by the brushing removal operation (FIG. 2 (4)).

In contrast, as described in Examples 1 to 9 in Table 2, the ultraviolet ray-blocking ink compositions containing at least 51.5 mass% of a polyfunctional monomer as the photopolymerizable monomer gave an embossed shape in which the coating film was solidified in a semi-cured state and was successfully removed by brushing, and the embossed shape was faithful to the design. As demonstrated here, the use of an ultraviolet ray-blocking ink composition containing at least a certain amount of a polyfunctional monomer enables the production of an embossed shape.

As described in Comparative Examples 6 and 7 in Table 3, the ultraviolet ray-blocking ink compositions that did not contain a non-polymerizable material (Comparative Example 6) or contained 5.0 mass% of a non-polymerizable material (Comparative Example 7) had low viscosity and exhibited rather unstable ejection in inkjet printing. Furthermore, the hardness of the cured products of the coating films resulting from the photoirradiation was higher than necessary, and part of the coating films could not be scrapped off by brushing removal. Specifically, as can be seen from the comparison between FIG. 2 (2) illustrating the printed character "A" and FIG. 2 (3) illustrating the printed character "K", Comparative Examples 6 and 7 failed to scrape off part of the portions of the coating film corresponding to the character, as illustrated in FIG. 2 (3).

In contrast, the ultraviolet ray-blocking ink compositions of Examples 1 to 9 in Table 2 that contained at least 12.5 mass% of non-polymerizable materials were stably printed by inkjet and also performed well in the evaluation of embossing suitability. As demonstrated here, an ultraviolet ray-blocking ink composition containing a certain amount of a non-polymerizable material attains inkjet printing stability and allows for easy removal of a cured product of a coating film.

From the comparison of Examples 1 and 2 (the content of the UV absorbent was 6.0 mass%) in Table 2 to Examples 4 (the content of the UV absorbent was 4.0 mass%) and 5 (the content of the UV absorbent was 12.0 mass%), Examples 1 and 2 outperformed in the evaluation of strippability. This result shows that the control of the content of the UV absorbent allows for control of the hardness of a semi-cured product of a coating film and thereby facilitates the production of an embossed shape.

### Industrial Field of Application

The ultraviolet ray-blocking ink composition of the present invention, by being printed on any article, can reduce the irradiation of ultraviolet rays to the article. In particular, the ultraviolet ray-blocking ink composition of the present invention can be suitably used to create an embossed shape on a surface of an article; and articles that have such an embossed shape may be used as so-called decorative boards for any building materials (such as floor materials, wall materials, and flooring), baseboards, furniture, and the like

### Description of the Symbols

- 1: Substrate
- 2-1: Coating film
- 2-2: Completely cured product of coating film
- 2-3: Semi-cured product of coating film
- 3-1: Ultraviolet ray-blocking ink composition
- 3-2: Cured product of ultraviolet ray-blocking ink composition
- 4: Exposure machine
- 5: Brush
- 6: Optional coating layer

## Claims

1. An ultraviolet ray-blocking ink composition for inkjet printing, comprising:
55.0 mass% or more of a photopolymerizable monomer, 3.0 mass% or more and less than 15.0 mass% of an UV absorbent, and 10.0 mass% or more and less than 30.0 mass% of a non-polymerizable material, relative to the ink composition;
wherein the photopolymerizable monomer comprises a polyfunctional monomer in a proportion of 50.0 mass% or more of the photopolymerizable monomer.

2. The ultraviolet ray-blocking ink composition according to claim 1, wherein the non-polymerizable material comprises a non-polymerizable high-molecular compound and a non-polymerizable low-molecular compound.

3. The ultraviolet ray-blocking ink composition according to claim 1 or 2, which is for inkjet printing on an uncured coating film comprising a photopolymerizable compound.

4. The ultraviolet ray-blocking ink composition according to claim 3, wherein the coating film comprises a photopolymerization initiator.

5. A method for manufacturing a substrate having an embossed surface, comprising:
Step A, printing by inkjet the ultraviolet ray-blocking ink composition described in claim 1 onto an uncured coating film formed on a substrate and containing a photopolymerizable compound;
Step B, applying ultraviolet rays to the coating film printed with the ultraviolet ray-blocking ink composition; and
Step C, removing the coating film in a region in which the ultraviolet ray-blocking ink composition is printed.

6. The manufacturing method according to claim 5, wherein the coating film has a thickness of 30 µm or more.

7. The manufacturing method according to claim 5 or 6, wherein Step C is a mechanically removing step.
